# EUROPEAN PATENT APPLICATION

(11) **EP 0 787 990 A1**
(43) Date of publication of application: **06.08.1997**
(21) Application number: 95933626.4
(22) Date of filing: 05.10.1995
(51) Int. Cl.: G01N 35/02, G01N 21/03

(54) **AUTOMATIC ANALYZER**

(30) Priority: 19.10.1994 JP 278586/94; 25.01.1995 JP 27680/95; 08.02.1995 JP 42608/95
(71) Applicant: JAPAN TECTRON INSTRUMENTS CORPORATION, Tokyo 192 (JP)
(72) Inventor: TOMINAGA, Kimimichi-Japan Tectron Instr. Corp., Tokyo 192 (JP); YOKOTA, Kazutomi-Japan Tectron Instr. Corp., Tokyo 192 (JP)
(74) Representative: Klunker . Schmitt-Nilson . Hirsch
(86) International application number: JP9502046
(87) International publication number: WO9612968

(57) **Abstract**

An automatic analyzer comprises a sampler, a reaction table, a reagent table, a dispenser, a photometer, wherein reactin tubes disposed on the reaction table are rotated several times and moved by one pitch per revolution of the reaction table, photometry is effected synchronously, and the quantities of the components are measured. First and second reagents are dispensed at the same position by the same reagent pipet, and primary and accondary stirring is effected at the same position. The reaction tube is of a twin type through which reaction solution can flow, and in which non-contact stirring of the solution can be made by the pump pressure variation. First and second reagent dispensing, sample dispensing, mixing, photometry, washing, waste discharge, etc., can be sequentially made on the same line during rotation. The reaction tube can be used for colorimetry at an optical measurement position and for automatic analysis of an electrolyte in the line.

## Description

### BACKGROUND OF THE INVENTION

### Field of the Invention

This invention relates in general to an automatic analyzer for blood sample analysis, and in particularly to such an apparatus of compact and simplified design which is capable of clinically testing spectroscopic biochemical, electrolytic and immunological samples. The main components of the analyzer include a reaction cell of twin type that has two internal chambers divided by a vertical partition, with a communicating passage to connect both chambers at the bottom. The passage permits, upon receiving a diluted blood sample and a reagent dispensed to blend, contact the mixture on both sides of the partition. The apparatus conducts a successive series of operations, ranging from sampling to optical measurement and cell washing and stirring which consists in causing waves of air pressure above the mixture in a double-chambered reaction cell.

### Description of the Related Art

Various types of automatic analysis apparatus have been developed, in which a sample is mixed with a reagent in order to observe the resultant reaction in an automatic manner. One such example is disclosed in the Japanese laid-open patent application Heisei 4-21 140. The proposed device comprises a sample table, a reaction table and a pair of reagent all disposed for rotation about their own axis in a stepping manner. A multitude of reaction cells are arranged along an external diameter in the top surface of the reaction table.

After mixing a serum sample and a dilution in the sample table, the mixture is moved over to the reaction table and dispensed into a reaction cell in the table. The reaction table is then rotated in steps to move the reaction cell in pitches, while sequential operations are carried out in order to observe the progress of reaction in the cell at separate sites. The same procedure is applied to the rest of the cells in successive order, with the timed rotation of the rotation table.

It is so designed that the multiple reaction cells, at the end of a cyclical rotation of the reaction table, move a whole rotation and stand one pitch way up from their original angular position in the table. At the following step, a pippeting device sucks up a first reagent from the reagent table and dispenses it into the reaction cell in which the reagent is allowed to react with the diluted sample. The mixture is then agitated by a mechanical means to promote the reaction for effective optical measurement.

The reaction cell is then moved by another several pitches to a position where a measured amount of a second or third reagent depending on the menu, is taken by a second pipetting device from the second reagent table, and dispensed into the cell. Similarly, the resultant mixture is agitated by the mechanical mixer. While the cell is further moved optical measurement of the reaction in the fluid contents and washing are carried out.

Another prior-art technique, disclosed in the Japanese laid-open utility model Heisei 5-93 540, also includes means for optical measurement. The reactions of cell contents are observed by optical measurement in which light beam is caused to pass through the cell below a vertical partition inside. The apparatus, it has been proved however, have had performed well only when the mixtures in reaction cells were sufficient in volume for optical measurement.

In those conventional analyzers where reaction calls of plain uncompartmentalized type are used, cell washing comprise a successive series of steps in conjunction with a number of mechanical agitators actuated in synchronization with a shower nozzle and multiple pumps. The pumps, which are eight in certain embodiments, are selectively run in timed sequence to supply pure water, acid and alkali washing agents through a manifold and a preheater to the cells.

These prior-art apparatus, however, are generally large in size and designed for increased efficiency so as to accommodate mass-scale applications, thus making the construction costly. The present invention has been proposed to eliminate the above-mentioned and other drawback of conventional techniques.

### OBJECTS OF THE PRESENT INVENTION

It is therefore a primary object of the present invention to provide an automatic analyzer of the type that carries cut most of its operation table-top which is compact and less costly in construction, still offers increased efficiency.

It is another object of this invention to provide such an analyzer in which the reaction table runs on a pulse motor which rotates the table in unidirectional stepping manner to move multiple reaction cells arranged along a diameter of the top surface of the table.

With multiple reaction cells on its surface, the reaction table is rotated for a predetermined number cycles in a single round of analysis. It is so designed that the multiple cells are moved to complete, at the end of each rotational cycle of the table, multiple whole rotations and stand one pitch up from the starting position of the preceding cycle.

A still another object of the invention is to provide such an analyzer which employs a reaction cell of twin-type that comprises a vertical partition mounted inside to divide the cell into two chambers, with a clearance defined above the bottom, dimensioned to have a height just enough to permit fluid passage from one sub-chamber of the compartmentalized reaction cell to the other, a design intended to facilitate sample agitation and cell cleaning.

A further object of this invention is to provide such an analyzer in which, with the pulse-motor driven rotation of the reaction table with constant speed, a series of operations are carried out in successive steps, including sampling, automated dilution, multiple reagent pipetting, stirring, washing, and optical measurement. Optical measurement, in which light absorption of liquid is monitored, is done a number of times for each cell.

An additional object of this invention is to provide such an apparatus in which agitation of the mixture of sample and reagent in a reaction cell is done by pressure variation created inside the cell. This non-contact stirring eliminates the problem of mechanical stirring to contaminate cells with residues from earlier operations, as possible in conventional techniques.

A still further object is to provide such an analyzer with improved optical measurement in which light beams for scanning the reaction of sample and reagent in a partitioned reaction cell is caused to pass the cell through the partition, well above its bottom, so as to keep out of interferences by diffused light refracted back from corners at the cell bottom.

A further object is to provide such an apparatus having an improved washing system for washing reaction cells to wash out them of reaction residues so that they can be reused. Washing is done in a number of steps, including waste disposal, detergent supply and drainage, washing water feed and drainage, multi-stage stirring, moisture removal and drying with a swab. The washing system mainly comprises multiple pumps, water and detergent supply and drain lines.

Another object is to provide such an apparatus which in which all reagent pipetting is done from the same table capable of offering at least two kinds of reagents at once and linked to means for keeping reagents containers at controlled temperature. Reagents containers are marked for identification by a computer controlled pipetting device having at least a pair of reagents nozzles. Each nozzle is devoted only to the same kind of reagent, so as to eliminate the problem of contaminating reagent of each kind with other when a single pipetting nozzle is used.

The automatic analyzer of this invention will be suitable to applications where a large number of samples are used, along with various kinds of reagent to achieve multiple analyses in a single sitting. Because of the compact size, the apparatus can also be installed in smaller hospitals and clinics and can perform essentially the same functions as larger systems.

The analyzer is also capable of a variety of analyses, such as spectroscopic, electrolytic, fluorescent and immunological analyses.

### BRIEF DESCRIPTION OF THE DRAWINGS

Figure 1 is a schematic diagram of the automated analyzer constructed according to the present invention:
Figure 2 is a diagram plotted to explain the progress of cyclical operations on a reaction cell;
Figure 3 is a cross-sectional view of a reaction cell in which a light beam for measurement is passed across a partition in the cell;
Figure 4 is a similar view to Figure 3, with the exception that the light beam is passed through the clearance below the partition;
Figure 5 is a pictorial representation of the series of washing steps for a reaction cell; and
Figure 6 is a schematic diagram of the washing system for reaction cells.

### DETAILED DESCRIPTION OF THE DRAWINGS

The automatic analyzer will be described in full detail according to the present invention in conjunction with the attached drawings.

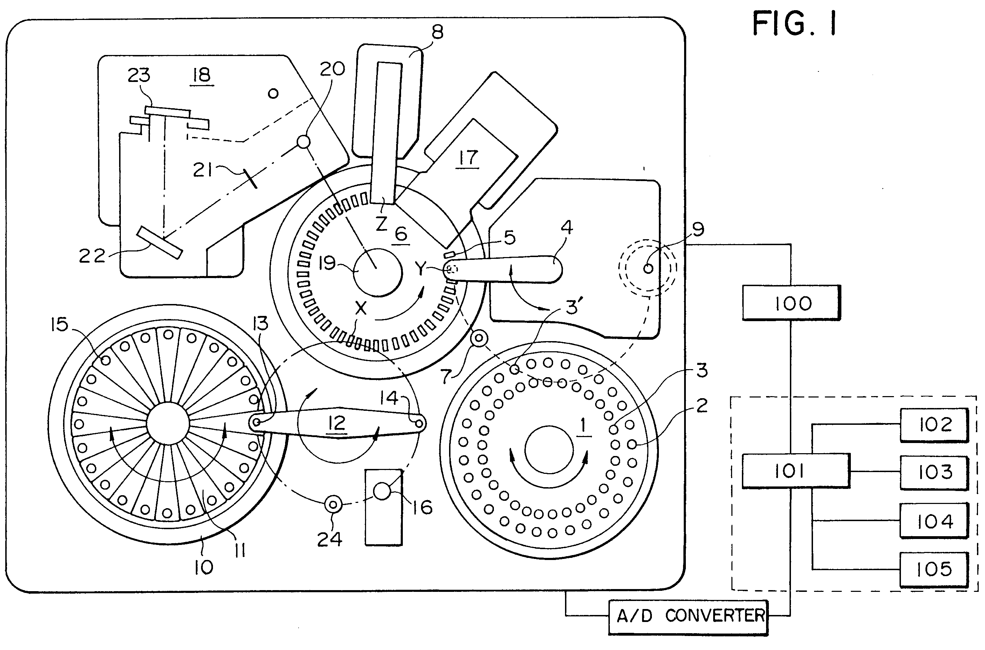

Referring first to Figure 1, the automatic analyzer according to a preferred embodiment of the invention includes a sampler 1 which is disposed for rotation about a vertical axis in both clockwise and counterclockwise directions. A plurality of sample containers 2 are arranged along an external diameter in the top surface of the sampler 1, and each containing therein a sample to be examined, such as blood serum.

Another plurality of containers 3 are also arranged along an internal diameter in the sampler 1, internally of the sample containers 2, each provided to contain a control sample or emergency sample. All containers may preferably be labeled with a bar code to indicate such clinical data, as one for identifying contents and patients, to be read by a bar code reader, not shown, and stored for computer processing.

Also, a sample pipetting device 4 is mounted provided to suck up a known amount of sample from the sampler 1 by random access, and dispenses it into a reaction cell 5.

A reaction table 6 may preferably be installed on one side of the sampler 1. A plurality of reaction cells 5 are arranged along an outer diameter in the top surface of the reaction table 6. In this particular embodiment, the table 6 carries 50 such cells 5. The reaction table 6 is disposed for rotation about a vertical axis and in a stepping manner.

One primarily highlight is that, for a single round of analysis, the reaction table 6 is rotated for a predetermined number of cycles to move the plural reaction cells 5 in unidirectional steps. The cells 5 are thus moved to complete, at the end of each rotational cycle of the reaction table, multiple whole rotations and stand one pitch way up from the starting position on the preceding cycle.

While the reaction table 5 is rotated in this way, the multiple reaction cells 5 each undergo a whole series of operations from the required menu for particular analysis, including reagent pipetting, stirring, optical measurement, waste drainage and cell washing.

In other words, while on one cell 5 is being dispensed with a reagent, a second cell is washed and a third is scanned by light beam for optical measurement, depending on their angular position in the rotating reaction table 6, as will later be described in full detail.

Another major characteristic lies in the structure of the reaction cell 5.

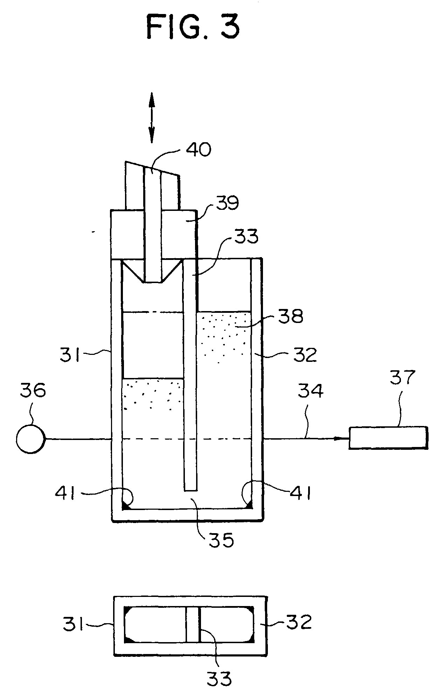

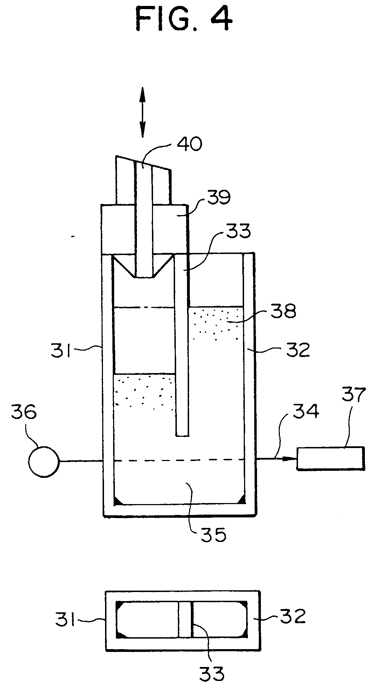

Referring further to Figures 3 and 4, the twin-type reaction cell 5 may preferably be rectangular-shaped with a square cross section, and comprises a partition 33 mounted in vertical position in the middle to divide the cell into two sub-chambers, between cell walls 31 and 32. In addition, the partition 33 is positioned to define a clearance 35 above the bottom of the cell 5. Inside the compartmentalized reaction cell 5, the clearance is limited to a height just enough to permit fluid passage below the partition 33 from one sub-chamber of the compartmentalized cell 5 to the other.

In optical measurement the light beam from monitoring the reaction taking place in the reaction cell 3 is caused to pass either through the partition 33 or through the clearance 35 below the partition.

The reaction cell 5 includes at the top of one of the divided chambers a port for pneumatic connection to a suction pump which supplies pulsating air to the cell to exert pressure waves above the fluid, thereby allowing the fluid to mix up. This method of contactless agitation eliminates the problem of contaminating cells with residues from earlier operations, as occuring in conventional physical agitators.

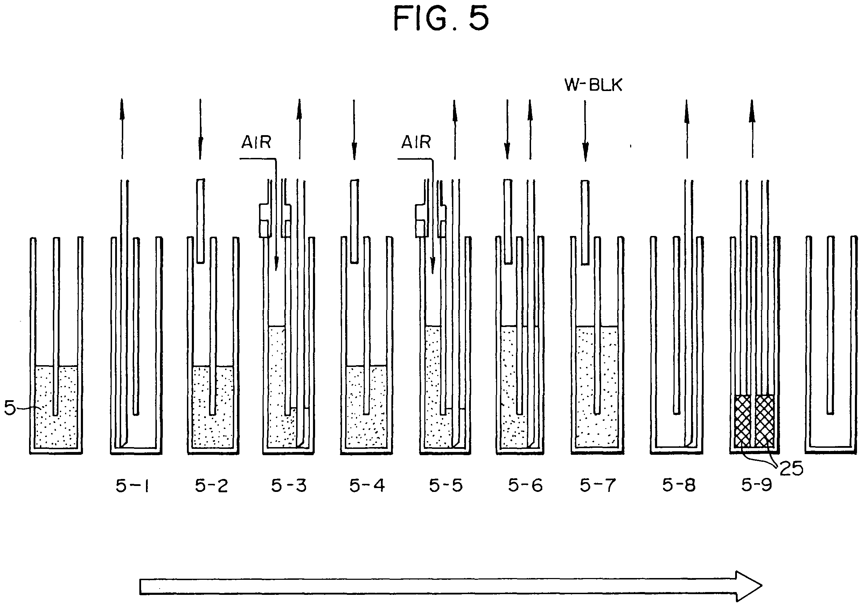

In addition, the automatic analyzer of this invention has a washing system 17 which wash out the reaction cell 5 following a series of steps, as plotted in chart form in Figure 5 which will later be described in detail.

In addition, the sample pipetting device 4, which may preferably be installed between the sampler 1 and the reaction table 6, comprises horizontally oscillating pipetting nozzle to swing between the sampler and the reaction table. The sample pipetting device 4 is operated to such up a measured amount of sample from a sample container 2 and move over to the reaction table 6 where the sucked-up aliquot is dispensed into the reaction cell 5 that just stands in the table in order to operates the resultant reaction in the cell.

In this particular embodiment, the sample pipetting device 4 is actuated to sample from the sample container 2 in the sampler 1.

The selection of sample containers 2 for sampling by the pipetting device 4 may be carried out by any suitable manner, such as random access, for example. Furthermore, the analyzer may preferably include automatic sample dilution means, not shown, by which, every time a sample is sucked up by the sample pipetting device 4, a predetermined amount of dilution is added to produce the desired sample density, prior to dispensing into the reaction cell 5, to thereby provide enhanced system efficiency.

The analyzer also has a washing station 7, preferably mounted between the sampler 1 and the reaction table 6, which wash out the pipetting nozzle of the sampling device 4 after each dispensing. Also, means for electrolytic analysis 9 may preferably be mounted adjacent to the sample pipetting device 4 to measure electrolytically the content of the sample container 2 in the sampler 1, from which the sample pipetting device samples an aliquot from that container and carries it over to the electrolytic bath 9.

The electrolytic analyzer may also preferably be capable of identify a variety of organic elements, such as sodium, potassium and chlorine by ionic condensation measurement. It may be any known technique, such as the one disclosed in Utility Model Heisei 6-42 204.

The sampler 1 is so designed that the internal circle of the plural sample containers 3 is located along a diameter that crosses the traveling path of the oscillating sample pipetting device 4 between the electrolytic bath 9 and position, so as to facilitate the device to sample from the containers 3.

Also, a reagent table 10 is mounted containers to the sampler 1, with a multiplicity of reagent containers 15 arranged along an outer diameter in the top surface of the table. The reagent table 10 also prepares different kinds of reagents in the containers 15 so as to accomodate two or more types of analysis to be done at the same time. The containers 15 which may preferably be marked to identify the kind of regent contained so as to enable selection of the desired reagent according to a computer program linked to an optical reader.

The reagent table 10 may preferably be equipped with temperature control means, not shown, for maintaining the reagent containers 15 at controlled temperature. The reagent table 10 is disposed for rotation about a vertical axis to sequentially move the containers 15 to a predetermined position where reagent pipetting is carried out by a reagent pipetting device 12.

The reagent pipetting device 12 is provided mounted at a location between the reaction table 6 and the reagent table 10. The pipetting device 12 is actuated to such up a measured amount of a reagent from the reagent table 10 and carry it over to the reaction table 6 where the sucked-up reagent aliquot is dispensed into a reaction cell 5.

The pipetting device 12 may preferably comprise a pair of pipetting nozzles 13 and 14 which are mounted at opposite ends of a horizontal arm balanced at the midpoint on the top of a vertical column disposed for rotation about a vertical axis. With the arrangement, the pipetting nozzles 13, 14 can be used alternatively by rotating the pipetting device 12 for pipetting from the reagent table 10. The paired nozzles 13 may preferably be limited to use only for the same kind of reagent, so as to avoid contamination of containers with residues from earlier operations with other kinds of reagent.

After a first round of pipetting operation is completed with one of the pipetting nozzles 13, 14, the next turn can be quickly attended by the other of the pair. While the second nozzle is being operated, the first can be washed for subsequent work, thereby enhancing the speed of overall analysis. A washing station 24 may preferably be mounted adjacent to the pipetting device 12 to wash out the pipetting nozzles 13, 14 after each pipetting operation.

Additionally, a washing system 17 for cleaning reaction cells 5 upon completion of optical measurement is provided mounted around the reaction table 6, preferably adjacent to the sample pipetting device 4. The system 17 does its washing job in a number of successive steps to carefully and systematically wash out the reaction cells 5, while the cells are rotated in the reaction table 6, of reaction waste so as to make the cells ready for subsequent reuse.

The steps include, in order, draining reaction waste, detergent supply, dilution of detergent, agitation, draining detergent waste, second agitation, cleaning water feed and suck-back, pure water supply and suck-back, drying with swab and moisture removal. Washing is done at a washing station which mainly comprises a multiplicity of pumps for separate purposes, such as supplying washing water, including pure water, through a manifold to the reaction table, a detergent pump for feeding detergent from a tank, a suction pump for draining waste, a suction line, and drain line.

An agitator 8, which may preferably be mounted adjacent to the washing system 17 around the reaction table 6, is provided for agitating of the inside of reaction cell 5s, upon being dispensed with a sample and a reagent to be mixed for reaction.

An optical measurement system 18 for spectroscopic observation is also installed around the reaction table 6, which analyzes the fluid contents of a reaction cell 5 with a scanning light beam 34 which is passed through the cell. The light beams 34 coming out from the cell 5 are studied to identify the parameters of the sample.

The system 18 includes a light source 19, which may be mounted in the center of the reaction table 6, which generates a light beam 34 to scan the sample in reaction cells 5. In operation, the beam 34 is targeted at one side of the cell 5 that just comes into to a predetermined position on the table 6. A reflector 20 is mounted in the system 18 to bend the light beam 34 from the other side of the cell 5, to go straight to a diffraction grid 22 through a slit 21.

The beam 34 is then diverted by the diffraction grid 22 toward a sensor 23 which in turn monitors the diffracted beam and outputs data for analysis of the sample, through measurement of light absorption, for example.

With the rotation of the reaction table 6, the measuring systems 18 observes the sample in each cell 5 over a number of times each time they cross the fixed path of scanning light beam 34, so as to enhance the accuracy of measurement. The measurement means 18 is linked to a computer system in which the data from optical measurement is stored in a computer 100 and can be displayed on a display device 104, such as a monitor or printer. The computer 100 also runs a program which goes through readings to help correct abnormalities in samples and reagents, by comparing them with control data or order a repeat of measurement. The computer system 100 may also be connected to means 101 for governing overall analytical operations, a storage medium 102, a data input system 103 and a warning system 105.

With respect to Figures 3 and 4, the twin-type reaction cell 5 may preferably be rectangular-shaped with a square cross section, with the partition 33 mounted between opposite walls 31 and 32 of the cell to devide the inside into two lateral sub-chambers. The partition 33 is held raised in the cell 5 to define a clearance 35 above the bottom.

The compartmentalized cell 5 is provided, at the top of one of the paired sub-chambers, with a removable air-tight cap 39 having a hole 40 bored in the center. The reaction cell 5 is connected through the hole 40 to a pump, not shown, which supplies air wave to exert pulsating pressure inside the capped sub-chambers of the cell, thus causing the inside liquid 38 to blend up.

To optimize this non-contact agitation, the clearance 35 should be set to a maximum of 6 millimeters in height, as measured from the cell bottom, or more preferably to 2mm, where liquid 38 is too small in quantity. Aggitation by this method enhances the mixing effect of the pulsating air to causing the fluid to surge up and down through the clearance 35 between the sub-chambers, even when the cell 5 contains only a small amount of fluid.

In addition, the hole 40 may also be used to drain the detergent used in washing of a reaction cell by the connection of a suction pump. The other sub-chamber of the compartmentalized cell 5 has an open port through which a sample, reagent and cleaning agent are dispensed.

Furthermore, the light beam 34 from the source 37 should be made to take its path through the reaction cell 5, at a height enough to keep out of the interference of diffused light from the corners 4 of the cell bottom. In this particular embodiment, the light beam 34 goes through the partition 33, sufficiently way up from the clearance 33.

After the reaction cell 5 is dispensed with a sample and a reagent, the mixed fluid 38 is agitated by a suction pump, not shown, which forces air into the cell through the opening 40 and stirs by pressure variation, without touching the mixture.

The optical measurement of this invention can be compared with a similar conventional technology disclosed in Utility Model Heisei 5-93 540. In the prior art, the light beam 34 from a source 36 goes through a clearance 35 in a reaction cell 5, below a partition 33, as illustrated in Figure 3, and arrives at a sensor 37 mounted on the other side cell. Likewise, a suction pump is also mounted to supply air into a reaction cell 5 through an opening 40 in a removal cap 39 and agitate the liquid 38 inside the cell.

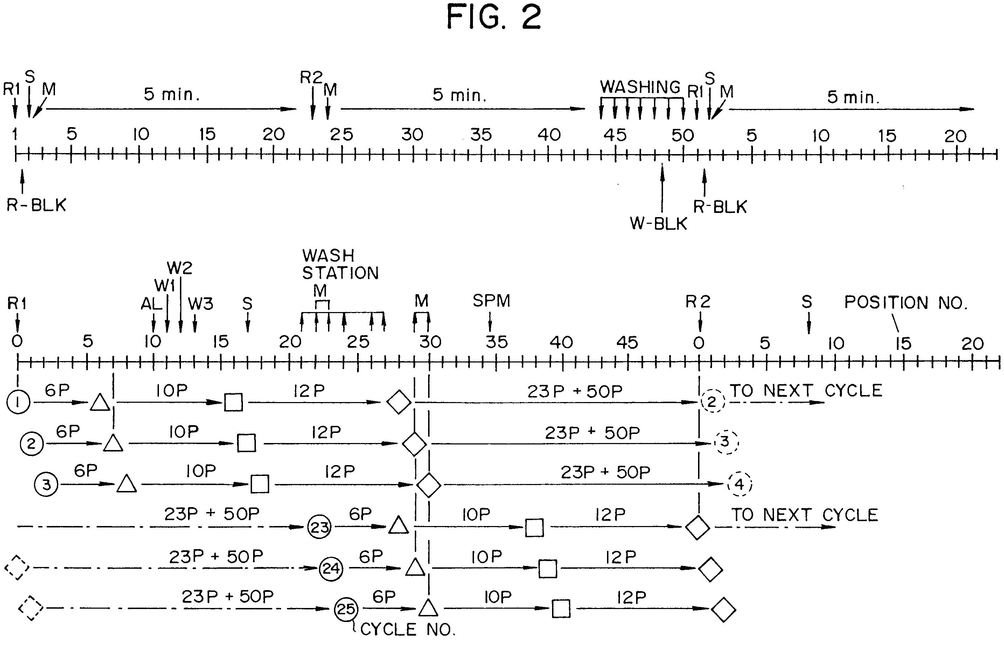

With reference to Figures 1 and 2, the operation of the automatic analyzer according to the present invention will be described. In this particular embodiment, the reaction table 6 is rotated counterclockwise in a stepping manner and, for a single round of analysis, on predetermined 50 cycles, to rotate 50 reaction cells 5 on its surface. However, the direction of rotation, the number of cells and cycles mensioned here are both a matter of choice and should not limit the invention.

The reaction cells 5, starting at their respective angular position in the table 6, move 50 pitches to complete a full circle, and make a predetermined number of whole rotations to complete a single round of analysis. During the entire round of operation, each reaction cell 5 is subjected to a variety of operations depending on their current position. One "cycle" for the reaction table 6 should not necessarily equal to the 50-step whole rotation for a reaction cell 5, as will be understood from the following description.

In fact, under this particular embodiment, the entire cycle for a reaction cell 5 should comprise two whole rotations, or 100 steps, that are divided into four legs, named actions A, B, C and D to cover a circumferential distance of rotational travel, not any specific fixed sectorial range along the circumference of the reaction table 6. Thus, at the end of a full cyclical rotation by the reaction table 6, the reaction cells 5 come round twice to stand one steps way up counterclockwise from the angular position from which they started off on the preceding cycle.

For simplicity's sake, description will be made with respect to a particular reaction cell 5 which, when the automatic analyzer is set to operation, happens to stand at the position X (in Figure 1) in the reaction table 6. At the outset, the reaction cell 5 is dispensed with a first reagent 11 by the nozzle 13 of the pipetting device 12 from the reagent table, marked as R1 in Figure 2.

The cell 5 is then rotated (counterclockwise) by Action A (six pitches) by turning the reaction table 6. With an interposition of another time period, the cell 5 is further moved through Action B (10 pitches) in the same direction, then through Action C (12 pitches), followed by Action D, or the remaining 23 pitches of the whole rotation plus an additional full circle of 50 pitches, to complete the 1st cycle.

During Action D, the measuring system 18 scans the cell 5 to check up on the dispensed reagent as it is prior to be blended with a sample to be analyzed, an operation indicated at R-BLK in Figure 2. At the end of this Action D, the cell 5 arrives at one pitch further away from the original starting point X.

The cell 5 then sets off on the second cycle from the new starting position, moving further through a combined Actions A and B to land the position Y (Figure 1) where the sample pipetting device 4 dispenses a sample to mix with the reagent, allowing the mixture to undergo chemical reaction, a step indicated at S in Figure 2. The reaction cell 5 is further rotated to the position Z (Figure 1) where the blended fluid is exposed to pressure wave developed by pulsating air from the agitator 8, in order to promote reaction of a well-blended fluid.

While the cell 5 is proceeding through Action D, the optical measuring system 18 monitors and measures the outcome of reaction in the cell, a step marked as SPM in Figure 2. After completing the second cycle, the reaction cell 5 now stands two pitches further up from the original position X, from which the cell starts off to the third cycle.

In this way, the cell 5 starts from a different circumferential position in the reaction table 6 at the end of every cycle. On the 23rd cycle, for example, the cell 5 begins the next round from the position 22 pitches up away from the original starting point X. On that cycle, after a peripheral travel of Actions A, B and C combined, the cell 5 resumes the original starting position X again where the nozzle 14 of the pipetting device 14 dispenses it with a second reagent, taken from the reagent table 10, an operation marked as R2 in Figure 2.

On the 24th cycle, rotating of the reaction table 6 through Action A brings the reaction cell 5 to the position Y where the agitator 8 stirs the contents of the cell to cause effective reaction in the mixture.

The reaction cell 5 will starts its 44th cycle from the position 43 pitches way up from the original position X. Between the 44 and last cycle, washing of the cell 5 takes place to get it rid of the reaction residues, thereby making it ready for a second round of analysis.

The reaction cell 5 is placed for washing between 44th and 50th cycle. The multiple steps of washing will be discussed with respect to both Figures 2 and 5.

On the 44th cycle, the cell 5 first takes an idle travel through Action A, B and C. The reaction cell 5 reaches the position Y at the end of Action C, where the cell is drained of its reaction residues, shown as 5-1 in Figure 5, by action of a pump. Then, the cell 5 is driven through Action D to complete the 44th cycle, ending up to land, again, one pitch counterclockwise up from the starting position on the preceding cycle.

On its 45th cycle, the reaction cell 5 arrives at a position devoted to detergent dispensing at the end of Action B, where a detergent, such as an alkali-based agent, pours into the cell, as indicated at 5-2 (Figure 5). The cell 5 is then moved through Action C to the position Y where pulsating air is introduced into the cell 5, stirring up the detergent inside to remove the reaction residues, as shown at 5-3. Upon completion of washing, the washing waste is then sucked up, still at the same position, in timed operation.

When the reaction cell 5 goes through the 46th cycle, it repeats similar washing steps as done on the preceding cycle, but this time using other than washing agents, such as ion-exchange water (5-4) followed by agitation and waste draining (5-5), both at the same location.

On the 47th cycle, at the end of Action B, the cell 5 is washed up with pure water (5-6) of an amount greater than the water volume on the 46th cycle. The cell 5 is then moved through Action C to reach the position Y where the washing water waste is removed.

At the end of Action B on the 48th cycle, the reaction cell 5 locates itself at the supply position again, where washing water is added into the cell. The cell 5 is then carried on through Action C to reach the cleaning position, where the cell proceeds without agitation or fluid draining this time. After Action D, the cell 5 arrives at where the water inside is examined by the measuring system for abnormalities. If a reaction cell 5 is proved to clear this testing, it will then be given a clean bill to qualify for the next round of analysis.

On the 49th cycle, the reaction cell 5 is moved through Actions A, B, and C to the position where it is drained of the water supplied on the preceding cycle. Then, the cell 5 consummates the cycle after Action D.

At the end of Action on the 50th cycle, the cell 5 gets to the washing station where the cell inside is dried off the remaining moisture using a sponge-tipped swab 25 (5-9).

In this way, during the period when each cell 5 is undergoing a whole series of operations. The upper diagram of Figure 2 indicates schematically how the steps are followed for a reaction cell 5 starting the cycles at position 0 with dispensing of a first reagent, marked as R1. Detergent washing and water rinsing were carried out through positions 10-14. Position 17 is devoted to sample pipetting, marked as S, while washing is conducted through positions from 21-27. Mixing, marked as M, is done at positions 29 and 30.

Position 35 handles measurement of the outcome of reaction taking place in a cell 5 by spectroscopic measurement, marked as SPM. At position 0, the position marking the beginning of the cycle's second half, dispensing of a second reagent takes place, marked as R2. Throughout the rest of positions, the steps are repeated. The rotational timing of the reaction table 6 is designed so that the entire round of 50 cycles will take about over 10 minutes.

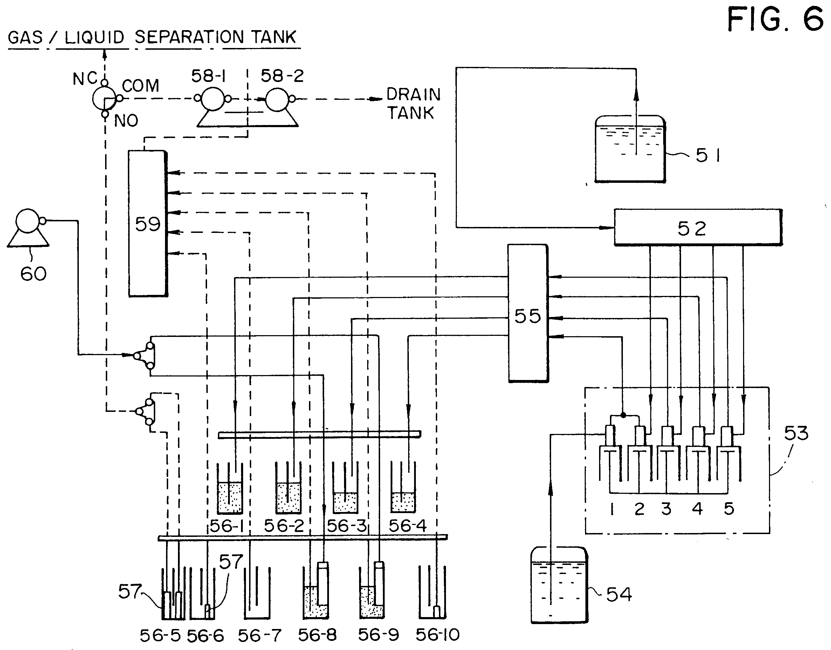

Referring then to Figure 6, the operation of the washing system 17 will be described in more detail. The cleaner 17 comprises multiple supply pumps 53 and drain pumps 58 connected through supply and drain lines to reaction cells 56, with washing done in successive steps. Pumps 53-2, 53-3, 53-4 tap a tank 51 to supply the cells 56 washing water, including ion-exchange type, through a manifold 52 and a preheater 55, operated separately depending on cleaning step 56-1, 56-2, 56-3, 56-4.

Likewise, an alkali-based detergent is supplied through the preheater 55 to the cell from a tank 54 by a pump 53-1 which also dilutes the detergent with water. The reaction cell, at washing step 56-5, is dried by a drying swab 57. A drain pump 58-1, 58-2 is then operated to suck up the waste and drain it into a drain tank, not shown, through a manifold 59, while the cell is being dried with the swab 57.

On the following 56-6, the drain pump 58 drained the waste from the cell, at the end of swab drying, into the drain tank, not shown, via the manifold 59. At step 56-7, the drain pump 58 is again operated to remove from the reaction cell all remaining moisture adhering to its walls and bottom, also through the manifold 59.

Washing steps 56-8, 56-9 devoted to non-contact stirring of the detergent through supplying air variations into the closed sub-chamber of a compartmentalized reaction cell 5.

Furthermore, at step 56-10, the drying swab 57 is actuated again, with the drain pump 58 being run to drain the reaction cell of the remaining moisture. Energization of an electromagnetic solenoid 61 may be provided to switch on the drain pump 58-1 to tap either a gas/liquid separation tank, both not shown, for suction or drainage.

## Claims

1. An automatic analyzer comprising a reaction table, a plurality of reaction cells arranged along an external diameter in the top surface of the reaction table, a sampler and a reagent table, the sampler and the reagent table being mounted to face each other across the reaction table, and the reaction table being rotated in a stepping manner to move the plural reaction cells thereon, wherein the cells being moved to complete, at the end of a rotational cycle of the reaction table, multiple whole rotations and stand one pitch up from the starting position on the preceding rotational cycle of the reaction table.

2. An automatic analyzer as set forth in Claim 1, wherein a single reagent pipetting device is mounted for dispensing at least two kinds of reagents for multiple analyses, by means of at least a pair of dispensing nozzles to do the dispensing at the same site.

3. An automatic analyzer as set forth in Claim 1, wherein primary and secondary agitations of the contents of the cells are carried out at the same site.

4. An automatic analyzer as set forth in Claim 1, wherein the reaction table comprises a reaction cell having a vertically partition mounted to divide the inside into two sub-chambers, the partition being uplifted form a clearance above the bottom of the cell, the clearance being dimensioned just enough in height to permit fluid passage from one of the paired sub-chambers to the other, wherein the optical measurement consists in analyzing the fluid in the cell by light beam that is caused to pass the cell along a path through the partition.

5. An automatic analyzer as set forth in Claim 4, wherein the comparmentalized reaction cell includes a port at the top of one of the twin subchambers, the port being provided for pressurized-air intake and discharge, whereby the fluid in the cell is stirred by the pressure variations developed by pulsating air introduced from the port into the associated sub-chamber.

6. An automatic analyzer as set forth in Claim 4, wherein means for washing reaction cells are provided, which comprises a fluid supply and drain piping, multiple pumps for supplying pure water and washing agents and for draining washing wastes, and mechanical means for manipulating a drying swab, wherein the washing operations are in successive manner.

## Amended claims

### Amended claims under Art. 19.1 PCT

1. (amended)
An automatic analyzer comprising a reaction table, a plurality of reaction cells arranged along an outer diameter in the top surface of the reaction table, a sampler and a reagent table, the sampler and the reagent table being mounted to face each other across the reaction table, and the reaction table being rotated in a stepping manner to move the plural reaction cells thereon, wherein the cells are moved to complete, at the end of a given rotational cycle of the reaction table, two to six whole rotations and stand one pitch up from the starting position on the preceding rotational cycle of the reaction table
2. An automatic analyzer as set forth in Claim 1, wherein a single reagent pipetting device is mounted for dispensing at least two kinds of reagents for multiple analyses, by means of at least a pair of dispensing nozzles to do the dispensing at the same site.
3. An automatic analyzer as set forth in Claim 1, wherein primary and secondary agitations of the contents of the cells are carried out at the same site.
4. (amended)
An automatic analyzer as set forth in Claim 1, wherein the reaction table comprises a reaction cell having a vertically partition mounted to divide the inside into two sub-chambers, the partition being uplifted form a clearance above the bottom of the cell, the clearance being dimensioned to measure a maximum 6 millimeters to permit fluid passage from one of the paired sub-chambers to the other, wherein the optical measurement consists in analyzing the fluid in the cell by light beam that is caused to pass the cell along a path through the partition.
5. An automatic analyzer as set forth in Claim 4, wherein the compartmentalized reaction cell includes a port at the top of one of the twin sub-chambers, the port being provided for pressurized-air intake and discharge, whereby the fluid in the cell is stirred by the pressure variations developed by pulsating air introduced from the port into the associated sub-chamber.
6. An automatic analyzer as set forth in Claim 4, wherein means for washing reaction cells are provided, which comprises a fluid supply and drain piping, multiple pumps for supplying pure water and washing agents and for draining washing wastes, and mechanical means for manipulating a drying swab, wherein the washing operations are in successive manner.

Statement under Art. 19.1 PCT
Claim 1 of the subject patent invention has been reworded to give a clearer description, from:
"the cells being moved to complete, at the end of each rotational cycle of the reaction table, multiple whole rotations and stand one pitch up from the starting position of the preceding rotational cycle of the reaction table," to:
"the cells being moved to complete, at the end of each rotational cycle of the reaction table, two to six whole rotations and stand one pitch up from the starting position of the preceding rotational cycle of the table."

In the cited example of prior art, optical measurement of the reaction in a reaction cell produces data only worth a single rotation of the reaction table. Furthermore, motor-driven rotation runs the reaction table. Furthermore, motor-driven rotation runs the reaction table at different rates of speed between acceleration and deceleration, resulting in a lack of accuracy in measuring results, which have to be corrected.

The present invention provides ensures enhanced measuring accuracy by enabling multiple sets of data to be obtained under the same condition, compared with the cited example in which the reaction cells are moved, at the end of a rotational cycle of the reaction table, to complete a whole rotation and stands one pitch further up from the starting position of the preceding rotational cycle.

Claim 4 is reworded to provide make it more clearly defined in the part describing the clearance in the reaction cell, from:
"the clearance being dimensioned just enough in height to permit fuild passage from one of the paired sub-chambers to the other" to:
"the clearance being dimensioned to measure a maximum 6 millimeters to permit fluid passage from one of the paired sub-chambers to the other"

Compared with the cited example of prior art, the present invention makes it possible to reduce the amount of liquids for analysis, so as to help enhance the efficiency of stirring, washing and measurement.
